(19) **Europäisches Patentamt**
**European Patent Office**
**Office européen des brevets**

(11) **EP 4 290 368 A1**

(12) **EUROPEAN PATENT APPLICATION**

(43) Date of publication:
**13.12.2023 Bulletin 2023/50**

(21) Application number: **22465539.9**

(22) Date of filing: **09.06.2022**

(51) International Patent Classification (IPC):
**G06F 8/36** (2018.01)        **G06F 8/70** (2018.01)
**G06F 8/71** (2018.01)

(52) Cooperative Patent Classification (CPC):
**G06F 8/70; G06F 8/36; G06F 8/71**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **COMAN, Andrei Laurentiu**
**500256 Brasov (RO)**

• **CHIS, Alexandru**
**500435 Brasov (RO)**
• **IUGA, Delia Elena**
**507086 Brasov (RO)**
• **MORRA, Carlos**
**10247 Berlin (DE)**

(74) Representative: **Fierascu, Cosmina-Catrinel**
**Rominvent SA**
**35 Ermil Pangratti Street**
**Sector 1**
**011882 Bucharest (RO)**

(54) **COMPUTER-IMPLEMENTED METHOD AND SYSTEM FOR GENERATING A COMMAND PIPELINE FOR CONTROLLING A TECHNICAL DEVICE**

(57) Computer-implemented method for generating a command pipeline for controlling a technical device, comprising the steps of:
a) Providing a first command pipeline with first commands to a generation device from a local database,
b) Providing at least one second command pipeline with second commands to a generation device,
c) Analyzing similarities between the first and the at least one second command pipeline by the generation device,
d) Identifying at least one difference between the first and the at least one second command pipeline by the generation device, and based on a predefined threshold for the at least one difference, selecting the at least one second command pipeline as a generated pipeline,
e) Providing the generated pipeline to a command device and controlling the technical device with the generated pipeline.

## FIG 2

EP 4 290 368 A1

**Description**

The invention relates to a computer-implemented method and a system for generating a command pipeline for controlling a technical device.

The invention further relates to a computer program, an electronically readable data carrier and a data carrier signal.

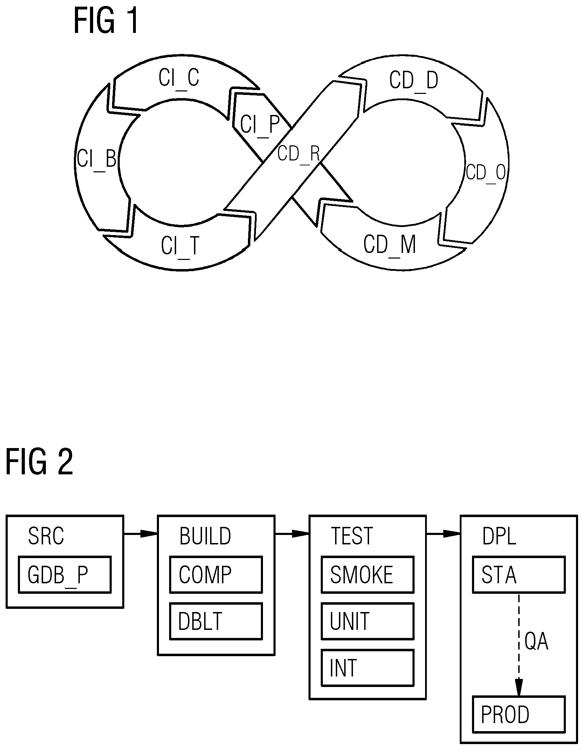

In software engineering combined practices of "Continuous Integration" (CI) and "Continuous Deployment and Delivery" (CD) are applied, abbreviated with "CI/CD", which is illustrated in **Fig. 1.**

CI/CD is a way of developing software in which it is foreseen to release updates at any time in a sustainable way. When changing code is routine, development cycles are more frequent, meaningful, and faster.

The Continuous Integration CI is represented by the process sequence Build CI_B, Code CI_C, Plan CI_P and Test CI_T.

The Continuous Deployment and Delivery CD is represented by the process sequence Deploy CD_D, Monitor CD_M, Operate CD_O and Release CD_R.

A CI/CD pipeline automates the software delivery process. The pipeline builds code, runs tests (CI), and safely deploys a new version of the application (CD).

Automated pipelines remove manual errors, provide standardized feedback loops to developers, and enable fast product iterations.

**Fig. 2** shows the stages of a CI/CD pipeline according to the art.

Starting from a software source SRC, including a global database push GDB_P, a software build BUI phase is executed, including compiling COMP and docker build DBLT phase for a container application.

Subsequently, a software test phase TEST includes a smoke phase SMOKE, a unit phase UNIT and an integration phase INT, followed by a deployment phase DPL with a staging phase STA leading to a production phase PROD.

Writing Continuous Integration / Continuous Deployment and Delivery (CI/CD) pipelines is a repetitive and tedious activity which is usually done manually and requires a lot of project specific scripts that are hard to maintain and/or reuse.

In the known art, the creation of CI/CD pipelines is usually done in a manual manner and is project specific. Some of the components, scripts or the configuration of the pipeline can be copied and adapted for similar projects.

However, the identification of said projects and which components can be reused is usually done manually based on the expert's experience and thus, a manual step.

The detection of similar repositories like on GitHub was already discussed. Nonetheless, the automatic generation of pipeline based on similar repositories has not been addressed in any previous work.

Therefore, it is the objective of the invention to disclose a method for automating the pipeline creation by means of analysis of similarity to previous projects and reuse of pipeline definitions to achieve a higher level of automation, to increase the internal processes at software development, to enhance the performance of the software and to minimize mis-functions.

The objective of the invention is solved by a computer-implemented method for generating a command pipeline for the control of a technical device, comprising the steps of:

a) Providing a first command pipeline with first commands to a generation device from a first database,

b) Providing at least one second command pipeline with second commands to a generation device from at least one second database,

c) Analyzing similarities between the first and the at least one second command pipeline by the generation device,

d) Identifying at least one difference between the first and the at least one second command pipeline by the generation device, and based on a predefined threshold for the at least one difference, selecting the at least one second command pipeline as a generated pipeline,

e) Providing the generated pipeline to a command device and controlling the technical device with the generated pipeline.

Thereby, the new first command pipeline is replaced by a similar second pipeline, which is already known and approved. Therefore, further engineering efforts like testing can be reduced.

The first data base can be a local data base, providing a first command pipeline for controlling the technical device.

The second data base can be a global data base, providing a second, for instance an approved or verified command pipeline for controlling the technical device.

A command pipeline in general is an instruction sequence containing commands.

The predefined threshold can be defined manually or automatically using predefined quality parameters.

The invention can be further developed, if at analyzing similarities at step c) an error measure based on the sum of squared differences is used:

$$M\big(\boldsymbol{w},\boldsymbol{p},\boldsymbol{r}_j\big) = \sum_{i=1}^{n} w_i (p_i - r_{i,j})^2$$

where

$p_i$, $r_{i,j}$  are percentages of programming or scripting languages in the local and remote projects, represented by the first and the at least one second command pipeline, respectively,

$w_i$  represents the relevance to each language, represented by the first and the at least one second command pipeline, assigned manually by an user, which must be positive numbers and $\sum_{i=1}^{n} w_i = 1$,

$n$  is the maximum number of programming languages from local and remote projects, represented by the first and the at least one second command pipeline,

$i$  is the index of a programming language for the first and the at least one second command pipeline,

$j$  is the number of the remote project, represented by the first and the at least one second command pipeline,

and the most similar project j, out of the first and the at least one second command pipeline, corresponds to the minimum value of $M(w,p,r_j)$.

The invention can be further developed, if analyzing similarities at step c) is performed for all of the at least one command pipeline, and a sorted list of all of the at least one command pipeline is generated according to the similarity achieved before, and when selecting the at least one second command pipeline as a generated pipeline, the item of the list is selected, which provides the lowest error measure according to the preceding claim.

In other words, the command pipeline is selected from the at least one command pipeline, which provides the lowest error measure and thus, is most similar to the first command pipeline.

Using the lowest error measure as defined before provides a very simple, accurate and representative measure for the similarity when comparing command pipelines regarding their programming language and/or syntax and/or semantics.

The objective of the invention is also solved by a system for generating a command pipeline for the control of a technical device, comprising a first and at least one second database, a generation device and a command device, and the system is configured to execute the steps of the method according to the preceding claims.

The objective of the invention is also solved by a computer program, comprising instructions, which cause a computer at its execution to execute the steps of the method according to the invention.

The objective of the invention is also solved by an electronically readable data carrier with readable control information stored thereon, which comprise the computer program according to the preceding claim configured to control a processing device, when using the data carrier at the processing device, and to execute the steps of the method according to the invention.

The objective of the invention is also solved by a data carrier signal, transmitting the computer program according to the invention.

The invention is described in an exemplary embodiment presented in detail in the subsequent figures. The figures show:

Fig. 1  an overview of a CI/CD pipeline,

Fig. 2  Stages of a CI/CD pipeline,

Fig. 3  a first embodiment of a system represented by a block diagram according to the invention,

Fig. 4  an embodiment of the general process to synchronize data between entities of the system according to the invention,

Fig. 5  an embodiment of the synchronization process between entities of the system according to the invention,

Fig. 6  an embodiment with further details of the synchronization process between entities of the system according to the invention,

Fig. 7  an embodiment with a flow chart of the method according to the invention,

Fig. 8  an embodiment with a block diagram of the system according to the invention.

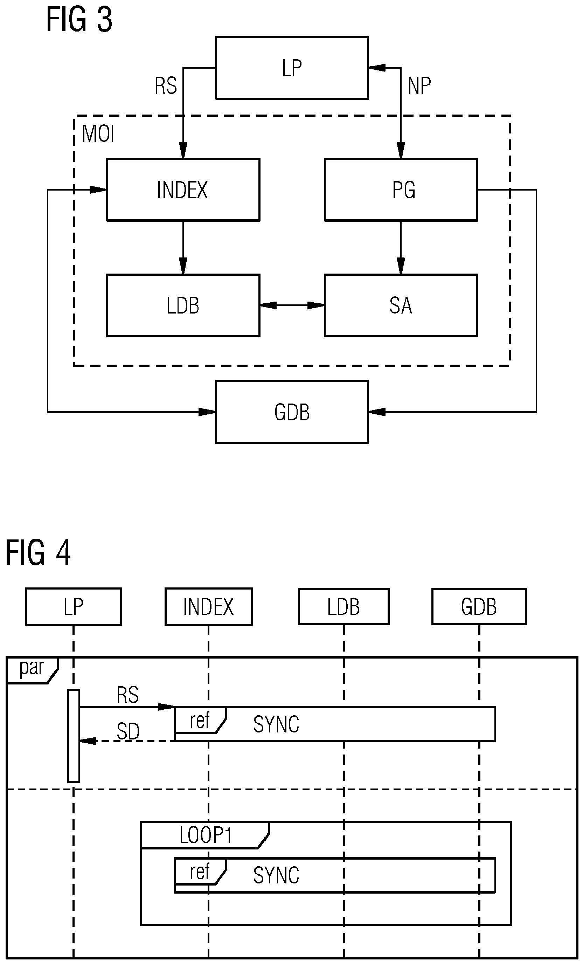

**Fig. 3** shows a first embodiment of a system represented by a block diagram according to the invention,

The invention proposes a method for automating the pipeline creation by means of analysis of similarity to previous projects and reuse of pipeline definitions.

Four major components are used by a system executing the method according to the invention, namely an indexer INDEX, a pipeline generator PG, a similarity analyzer SA and a local database LDB, which are involved in the process along the external components as a local project LP and a global database GDB like a GitLab instance, and the interaction among them are presented in Fig. 3 showing the method according to the invention MAI as an exemplary embodiment.

The pipeline generator PG generates the configuration and code for the instantiation of the pipeline and the connection of the CI/CD tools.

The similarity Analyzer SA analyzes the project properties and compares it to existing projects in the repositories.

The local database LDB stores the properties of the projects in the repositories.

The indexer INDEX monitors the repositories for changes and updates the local database.

The global database GDB, e.g. a Gitlab Instance, stores the repositories.

When a new CI/CD Pipeline definition is required by the local project LP, on a new pipeline demand NP, the pipeline generator PG supported by the similarity analyzer SA returns the most relevant configuration.

The local database LDB allows both synchronous and asynchronous updates of the content retrieved from the GitLab instance, on a synchronization request RS.

This update is performed by the indexer INDEX, which queries the GitLab API for the most recent changes in the repository.

**Fig. 4** shows a general process to synchronize data between entities of the system according to the invention.

The local project requests synchronization RS, the related entity performs respective actions by a synchronization step SYNC and signalizes subsequently by synchronization done SD.

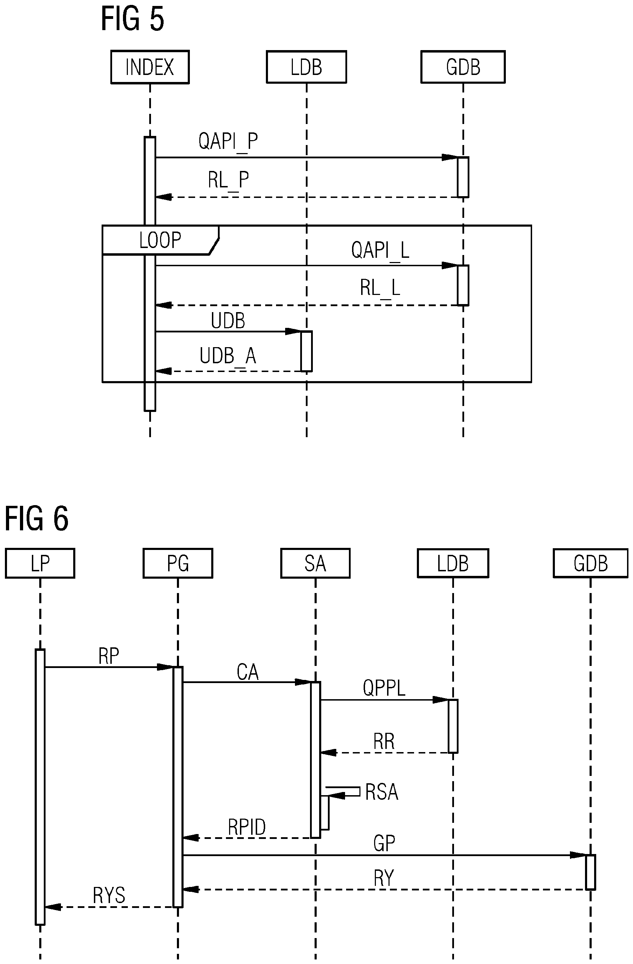

As depicted in Fig. 5, when a synchronization is called, the indexer INDEX will request the list of projects from the backing Git instance (Gitlab) and, for each of them, update the respective entries in the local database LDB with the new values for the programming languages code percentages. The new values can now be used to provide more accurate references to similar projects from which to match and grab the pipeline structure.

Optionally one or more synchronization steps SYNC can be repeated, indicated by the general reference LOOP.

Within the sequence diagram a "par" notation is used to indicate a "parallel" process.

Fig 4 shows that the synchronization process can happen synchronously or asynchronously, so either is triggered explicitly by the local project and/or is handled on an external trigger, e.g. a cron job (job scheduling utility).

Within the sequence diagram a "ref" notation is used for a reference. It is to show that another sequence, e.g. in Fig. 5 is called which impacts the three actors on top, indexer INDEX, local database LDB and Gitlab instance/ global database GDB.

To generate a new pipeline configuration for the local project LP, the following steps are executed, which are also depicted in **Fig. 5 to 7**:

    a) The indexer INDEX is triggered for instance by a scheduler or a developer.
    b) The indexer INDEX queries with a the GitLab instance GDB to update the local database LDB with remote projects and their respective programming with a command QAPI_P and/or scripting languages with a command QAPI_P QAPI_L usage percentages. The GitLab instance GDB provides a respective return list for language RL_L and/or a return list for project RL_P. If necessary, the queries are repeated within a loop LOOP. Subsequently, the indexer INDEX updates the local database LDB accordingly by signal UDB and receives optionally an acknowledge signal UDB_A.

c) The similarity analyzer provides an algorithm, which uses an error measure based on the sum of squared differences:

$$M(\boldsymbol{w}, \boldsymbol{p}, \boldsymbol{r}_j) = \sum_{i=1}^{n} w_i (p_i - r_{i,j})^2$$

where

$p_i$, $r_{i,j}$     are the percentages of programming or scripting languages in the local and remote projects, respectively,

$w_i$     represents the relevance the user assigns to each language, which must be positive numbers and $\sum_{i=1}^{n} w_i = 1$,

$n$     is the maximum number of programming languages from local and remote projects,

$i$     is the index of the programming language,

j     is the number of the remote project.

The most similar project j corresponds to the minimum value of $M(\boldsymbol{w}, \boldsymbol{p}, \boldsymbol{r}_j)$.

First, the local project LP performs a request pipeline RP call to the pipeline generator PG.

The pipeline generator PG calls the similarity analyzer SA with a call analyzer CA, which performs the algorithm explained before using signals for query project and pipeline QPPL and delivers a return result RR.

The similarity analyzer SA runs similarity analysis RSA and returns with step RPID a return project ID to the pipeline generator PG.

The pipeline generator PG calls step GP to get pipeline YAML from a Git repository REPO.

GitLab uses the simplified markup language "Yet Another Markup Language" (YAML) for data serialization to define the structure of a CI/CD Pipeline. By YAML a reference to the pipeline configuration of a specific project is made.

The similarity analyzer SA returns by return YAML RY at most one project which is below the error threshold, in particular by the return YAML structure RYS.

For a Gitlab pipeline configuration file, any specificity regarding the original project is to be removed, and the configuration returned by the Gitlab Instance will go through an internal process in the Pipeline Generator which will sanitize it: remove comments, references to customer environment variables etc. Only a skeleton should be left which details the overall flow of the pipeline.

　d) Based on a predefined threshold, the remote project selected at step c) is accepted or not.
　e) The pipeline generator PG receives the accepted project and fetches its CI / CD pipeline configuration from the remote GitLab Instance GDB.
　f) The pipeline generator PG then parses this configuration and returns the template back to the local project LP, by involving the indexer INDEX optionally.

The indexer INDEX updates the local database LDB accordingly by signal UDB. Doing so, the pipeline configurations are not stored in the database. In order to determine the best project from which to grab the pipeline skeleton, the algorithm uses only the languages information, so the local database can be thought of as a cache for those. When the response from GitLab GDB with the language information is received for a specific project, the percentage of each language for that project is updated in the database and can be used right away by the similarity analyzer.

As mentioned previously, the pipeline configuration is not stored in the local database LDB. After the best project has been identified, the Configuration needs to be fetched from the repository backing that specific GitLab project.

At step f) pipeline generator PG returns the template back to the LP local project. However, the indexer INDEX is only involved in scraping Gitlab Projects and in the synchronization process.

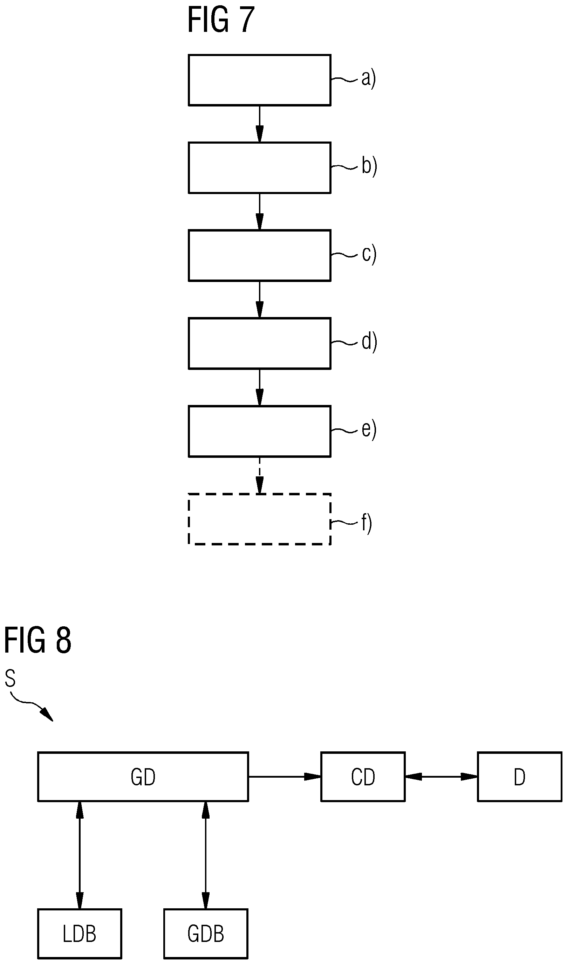

**Fig. 7** shows an embodiment with a simplified flow chart of the method according to the invention.

The step f) as described above is optional.

**Fig. 8** shows an embodiment with a simplified block diagram of a system S according to the invention.

The system S for generating a command pipeline for controlling a technical device D comprises a first and at least one second database LDB, GDB, a generation device GD, a command device CD for controlling the technical device D.

The system is configured to execute the steps of the method according to the invention.

**List of reference numerals:**

| | |
|---|---|
| BUI | Build |
| CA | call analyzer |
| CD_D | deploy |
| CD_M | monitor |
| CD_O | operate |
| CD_R | release |
| CI_B | build |
| CI_C | code |
| CI_P | plan |
| CI_T | test |
| COMP | compile |
| D | device |
| DBLT | docker build |
| DPL | Deploy |
| GDB | global database |
| GDB_P | global database push |
| GP | get pipeline yami from repo |
| INDEX | indexer |
| INT | integration |
| LDB | local database |
| LOOP | loop, e.g. every x hours or days |
| LP | local project |
| MAI | embodiment of method according to the invention |
| NP | new pipeline |
| PG | pipeline generator |
| PROD | production |
| QAPI_L | query API for language |
| QAPI_P | query API for project |
| QPPL | query project and pipeline |
| RL_L | return list for language |
| RL_P | return list for project |
| RP | request pipeline |
| RPID | return project ID |
| RR | return result |
| RS | request synchronization |
| RSA | run similarity analysis |
| RY | return yami |
| RYS | return yami structure |
| S | system |
| SA | similarity analyzer |
| SD | synchronization done |
| SMOKE | smoke |
| SRC | Source |
| STA | staging |
| TEST | Test |
| UDB | update database |
| UDB_A | database updated |
| UNIT | unit |
| YAML | Yet Another Markup Language" |
| Ref | reference |
| Par | parameter |

**Claims**

1. Computer-implemented method for generating a command pipeline for controlling a technical device (D), comprising the steps of:

　a) Providing a first command pipeline with first commands to a generation device from a first database,
　b) Providing at least one second command pipeline with second commands to a generation device from at least one second database,
　c) Analyzing similarities between the first and the at least one second command pipeline by the generation device,

d) Identifying at least one difference between the first and the at least one second command pipeline by the generation device, and based on a predefined threshold for the at least one difference, selecting the at least one second command pipeline as a generated pipeline,

e) Providing the generated pipeline to a command device and controlling the technical device (D) with the generated pipeline.

2. Method according to the preceding claim, wherein at analyzing similarities at step c) an error measure based on the sum of squared differences is used:

$$M(\boldsymbol{w}, \boldsymbol{p}, \boldsymbol{r}_j) = \sum_{i=1}^{n} w_i (p_i - r_{i,j})^2$$

where

$p_i$, $r_{i,j}$ are percentages of programming or scripting languages in the local and remote projects, represented by the first and the at least one second command pipeline, respectively,

$w_i$ represents the relevance to each language, represented by the first and the at least one second command pipeline, assigned manually by an user, which must be positive numbers and

$$\sum_{i=1}^{n} w_i = 1$$
,

$n$ is the maximum number of programming languages from local and remote projects, represented by the first and the at least one second command pipeline,

$i$ is the index of a programming language for the first and the at least one second command pipeline,

$j$ is the number of the remote project, represented by the first and the at least one second command pipeline,

and the most similar project $\boldsymbol{j}$, out of the first and the at least one second command pipeline, corresponds to the minimum value of $M(\boldsymbol{w}, \boldsymbol{p}, \boldsymbol{r}_j)$.

3. Method according to the preceding claim, wherein at analyzing similarities at step c) is performed for all of the at least one command pipeline, and a sorted list of all of the at least one command pipeline is generated according to the similarity achieved before, and when selecting the at least one second command pipeline as a generated pipeline, the item of the list is selected, which provides the lowest error measure.

4. System (S) for generating a command pipeline for controlling a technical device (D), comprising a first and at least one second database (LDB, GDB), a generation device (GD), a command device (CD) and controlling the technical device (D), and the system is configured to execute the steps of the method according to the preceding claims.

5. Computer program, comprising instructions, which cause a computer at its execution to execute the steps of the method according to one of the claims 1 to 3.

6. Electronically readable data carrier with readable control information stored thereon, which comprise the computer program according to the preceding claim configured to control a processing device, when using the data carrier at the processing device, and to execute the steps of the method according to one of the claims 1 to 3.

7. Data carrier signal, transmitting the computer program according to claim 5.

## FIG 1

## FIG 2

## FIG 3

## FIG 4

FIG 5

| INDEX | LDB | GDB |

QAPI_P

RL_P

LOOP

QAPI_L

RL_L

UDB

UDB_A

FIG 6

| LP | PG | SA | LDB | GDB |

RP

CA

QPPL

RR

RSA

RPID

GP

RY

RYS

## FIG 7

## FIG 8

Europäisches
Patentamt

European
Patent Office

Office européen
des brevets

# EUROPEAN SEARCH REPORT

Application Number

EP 22 46 5539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/258976 A1 (PAREES BENJAMIN MICHAEL [US] ET AL) 22 August 2019 (2019-08-22) * paragraphs [0002], [0013], [0019], [0021]; figure 1 * * paragraphs [0041], [0042], [0055] * | 1-7 | INV. G06F8/36 G06F8/70 G06F8/71 |
| A | WO 2022/093178 A1 (HEWLETT PACKARD DEVELOPMENT CO [US]) 5 May 2022 (2022-05-05) * paragraphs [0020], [0022], [0037], [0038] * * paragraph [0050] * | 1-7 | |
| A | US 2022/058018 A1 (BREGMAN ARIE [IL] ET AL) 24 February 2022 (2022-02-24) * paragraphs [0023], [0026] * | 1-7 | |
| A | US 2016/253172 A1 (SHANI INBAR [IL] ET AL) 1 September 2016 (2016-09-01) * paragraphs [0010], [0040] * | 1-7 | |

TECHNICAL FIELDS
SEARCHED (IPC)

G06F

The present search report has been drawn up for all claims

| Place of search | Date of completion of the search | Examiner |
|---|---|---|
| Munich | 11 November 2022 | Hoareau, Samuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 46 5539**

This annex lists the patent family members relating to the patent documents cited in the above-mentioned European search report.
The members are as contained in the European Patent Office EDP file on
The European Patent Office is in no way liable for these particulars which are merely given for the purpose of information.

**11-11-2022**

| Patent document cited in search report | Publication date | Patent family member(s) | Publication date |
|---|---|---|---|
| US 2019258976 A1 | 22-08-2019 | NONE | |
| WO 2022093178 A1 | 05-05-2022 | NONE | |
| US 2022058018 A1 | 24-02-2022 | NONE | |
| US 2016253172 A1 | 01-09-2016 | US 2016253172 A1<br>WO 2015073025 A1 | 01-09-2016<br>21-05-2015 |

EPO FORM P0459

For more details about this annex : see Official Journal of the European Patent Office, No. 12/82